# EUROPÄISCHE PATENTSCHRIFT

(11) **EP 1 403 679 B1**
(45) Veröffentlichungstag und Bekanntmachung des Hinweises auf die Patenterteilung: **08.10.2008**
(21) Anmeldenummer: 03018978.1
(22) Anmeldetag: 21.08.2003
(51) Int. Cl.: G02B 25/00

(54) **Okular**
Eyepiece
Oculaire

(30) Priorität: 27.09.2002 DE 10244814
(43) Veröffentlichungstag der Anmeldung: 31.03.2004
(73) Patentinhaber: Carl Zeiss Sports Optics GmbH, 35576 Wetzlar (DE)
(72) Erfinder: Besenmatter, Walter, Dr., 35619 Braunfels (DE); Claudi, Volker, 35633 Lahnau (DE)
(74) Vertreter: Lorenz, Werner

(56) Entgegenhaltungen:
- EP-A- 0 924 545
- DE-A- 2 640 284
- DE-A- 3 824 268
- DE-A- 19 654 224
- DE-C- 941 027
- US-A- 5 446 590

## Beschreibung

Die Erfindung betrifft ein Okular mit einer in einer Zwischenbildebene eingebrachten Strichplatte, wobei sich in einem Gehäuse befindliche Linsengruppen fest oder verschiebbar angeordnet sind.

Ein derartiges Okular ist aus der DE 38 24 268 bekannt. Die DE 38 24 268 zeigt ein Zielfernrohr, in welchem eine Strichplatte in einer Halterung in einer Zwischenbildebene angeordnet ist. Die Strichplatte kann durch einen Entfernungs- und Seitentrieb bei Durchsicht in der Zwischenbildebene relativ verstellt werden, wobei ein Anzeigeelement in einer Justiereinrichtung angebracht ist, die es erlaubt, eine Justierung in zwei Koordinaten senkrecht zur optischen Achse vorzunehmen. Die Zwischenbildebene, in der die Strichplatte angeordnet ist, liegt jedoch vor einer ersten Linse des Okulars in Strahlrichtung gesehen.

Weiterhin sind allgemein Okulare bekannt, bei denen die Zwischenbildebene nicht vor einer letzten Linse des Okulars liegt, sondern im Okular zwischen den einzelnen Linsen. Der Nachteil hierbei ist jedoch, dass ein Ausgleich der Fehlsichtigkeit der Augen somit nicht gegeben ist.

Aus der deutschen Offenlegungsschrift DE 26 40 284 ist ferner ein Okular bekannt, bei dem auf einem Einschubstutzen eine Strichplatte angebracht, wobei der Einschubstutzen zum Ausgleich einer Fehlsichtigkeit verschiebbar ausgeführt ist. Nachteilig bei der in der genannten Schrift gezeigten Anordnung ist es jedoch, dass gerade der Bereich der durch das Okular abzubildenden Zwischenbildebene nur unzureichend vor Umwelteinflüssen wie bspw. dem Eindringen von Partikeln oder Feuchtigkeit geschützt ist. Eingedrungene Partikel oder kondensierte Flüssigkeitstropfen, die sich auf der Strichplatte befinden, würden durch das Okular abgebildet und damit die Betrachtung störende Effekte verursachen.

Demgemäß ist es Aufgabe der Erfindung, ein Okular zu schaffen, in welcher eine Strichplatte derart angeordnet ist, dass ein Ausgleich einer Fehlsichtigkeit vorgenommen werden.

Diese Aufgabe wird erfindungsgemäß dadurch gelöst, dass die Linsengruppen derart in dem gemeinsamen Gehäuse angeordnet sind, dass nach einer ersten Linse in Strahlrichtung gesehen im Bereich zwischen den das Okular begrenzenden Linsengruppen die Zwischenbildebene entsteht wobei für einen Fehlsichtigkeitsausgleich die Strichplatte auf einer optischen Achse bezüglich des gemeinsamen Gehäuses verschiebbar ist.

Die Linsen im Okular sind so angeordnet, dass eine reelle Zwischenbildebene nach einer ersten Linse entsteht. In diese reelle Zwischenbildebene wird beispielsweise bei Messmikroskopen, Messfernrohren oder Beobachtungsfernrohren eine Strichplatte eingebracht, die es ermöglicht, Objektpunkte zu positionieren. Ebenfalls können somit Profilvergleiche im vergrößerten Bild durchgeführt werden.

Ein derartiger Fehlsichtigkeitsausgleich ist durch ein Verschieben der einzelnen Linsen im Okular, ohne dass die optischen Parameter des Okulars verändert werden bei bekannten Okularen, nicht möglich. Erfindungsgemäß kann nunmehr die Strichplatte auf der optischen Achse innerhalb der zwei begrenzenden Linsen oder Linsensysteme zum Fehlsichtigkeitsausgleich verschoben werden.

Eine besonders vorteilhafte Weiterbildung der Erfindung sieht vor, dass zur Erreichung von variablen Vergrößerungen zwei Achromate, welche hinter einer Augenlinse angeordnet sind, zusammen mit einem Negativachromat, welcher vor der Strichplatte vorgesehen ist, auf der optischen Achse verschiebbar angeordnet sind.

Auf diese Weise ist es möglich bestimmte Vergrößerungen zu erreichen, indem zwei Linsengruppen entlang der optischen Achse aufeinander zu bewegt werden, wobei die Zwischenbildebene an einer anderen Stelle im Okular entsteht und zusammen mit der Zwischenbildebene die Strichplatte bewegt wird. Bezüglich dem Fehlsichtigkeitsausgleich treten somit keine Probleme auf.

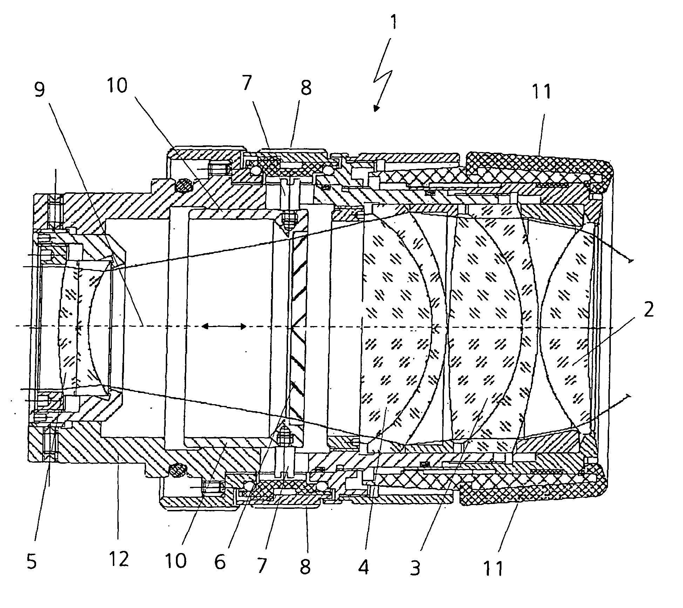

Vorteilhafte Ausgestaltungen und Weiterbildungen ergeben sich aus den weiteren Unteransprüchen und dem nachfolgend anhand der Zeichnung prinzipmäßig beschriebenen Ausführungsbeispiel.

Die Figur zeigt ein erfindungsgemäßes Okular 1, wobei nur die für die Erfindung wichtigsten Teile beziehungsweise Elemente gekennzeichnet sind.

Das Okular 1 beinhaltet sechs Linsen, eine positive Augenlinse 2, zwei positive Achromate 3 und 4, die jeweils aus zwei Einzellinsen zusammengekittet sind, und einen negativen Achromat 5. Die beiden Achromate 3 und 4 besitzen einen freien Linsendurchmesser von ca. 30 mm. Natürlich können die freien Linsendurchmesser der Achromate 3 und 4 auch größer oder kleiner ausgebildet sein. Die beiden Achromate 3 und 4 sowie der Achromat 5 bilden jeder für sich ein optisches System, wobei jeweils für zwei Farben der Farbenlängsfehler korrigiert ist und wenn erforderlich auch in einer Farbe der Öffnungsfehler. Ebenfalls kann eine Korrektur von Zweischalenfehler, Bildfeldwölbung, Koma und Verzeichnung vorgesehen sein, je nach Ausführungsart und Verwendungszweck.

Durch Einbringen einer Strichplatte 6 in eine Zwischenbildebene, die zwischen dem Achromaten 4 und dem Achromaten 5 entsteht, kann das Okular 1 beispielsweise in einem Beobachtungsfernrohr zur Beobachtung bzw. zur Positionierung eines Objektes eingebaut werden. Durch Verschieben der Strichplatte 6 in Pfeilrichtung, wobei die Achromaten 3,4,5 und die Augenlinse 2 fest angeordnet sind, kann eine Fehlsichtigkeit eines Benutzers ausgeglichen werden. Zum Ausgleich der Fehlsichtigkeit bei myopen Personen sollte die Strichplatte 6 entlang einer optischen Achse 9 näher an das Auge herangeschoben werden. Für hyperope Personen sollte dementsprechend die Strichplatte 6 weiter weg vom Auge entlang der optischen Achse 9 geschoben werden, um die Fehlsichtigkeit dementsprechend ausgleichen zu können.

Zwischen der Strichplatte 6 und den beiden angrenzenden Achromaten 4 und 5 liegt ein gewisser Freiraum, in dem die Strichplatte 6 entlang der optischen Achse 9 in Richtung Achromat 4 oder in Richtung Achromat 5 verschoben werden kann. Der Ausgleich der Fehlsichtigkeit hängt dementsprechend von der Größe der Verschiebewege ab, was bedeutet, dass die Fehlsichtigkeit nur in dem Maße ausgeglichen werden kann, wie es der Entfernung der Strichplatte 6 zur nächstliegenden Linse 4 oder 5 entspricht. Sollte ein vollständiger Ausgleich der vorliegenden Fehlsichtigkeit nicht möglich sein, kann das Okular 1 natürlich auch ein Brillenträger benutzen. Hierfür werden zwei Augenmuscheln 11, welche auf der dem Auge zugewandten Seite an dem Okular 1 angebracht sind, im eingeschobenen Zustand belassen. Hierfür ist unbedingt ein großer Abstand der Austrittspupille von der letzten Linsenfläche erforderlich. Bei Nichtbrillenträgern werden zur Benutzung des Okulars 1 beziehungsweise des optischen Systems die Augenmuscheln 11 aus bzw. an dem Okular 1 herausgezogen, damit der Ort der Austrittspupille mit dem Ort der Augenpupille zusammenfallen kann. Diese Forderung ist zur Erzielung eines nicht eingeschränkten Gesichtfeldes notwendig.

Die Strichplatte 6 ist in einer Strichplattenfassung 10 eingebracht. Im Inneren des Okulars 1 ist die Strichplatte 6 mit Verbindungselementen 7 fest verbunden. Die Verbindungselemente 7 sind wiederum an jeweils mit einem an der Außenseite des Okulars 1 angebrachten Rändelring 8 fest angebracht. Der Rändelring 8 besitzt eine entsprechende Kurve oder auch ein Gewinde. Eine Dioptrieneinstellung ist erforderlich, um den Abstand Linsen (4,5) - Strichplatte (6) durch Drehen an dem Rändelring 8 einzustellen. Oft wird hierfür ein mehrgängiges Trapezgewinde gebraucht, in einfacheren Fällen auch eine Spiralnut. An dem Gehäuse 12 des Okulars 1 kann eine Dioptrienteilung angebracht sein.

Weiterhin ist es möglich, Linsen zur Veränderung der Vergrößerung zu verschieben. In den meisten Fällen wird die Augenlinse 2 nicht verschoben, damit der Benutzer des Okulars 1 nicht irritiert wird, wenn dieser durch Drehen eines Ringes die Linsen zu verschieben beginnt. Es werden in den meisten Fällen, wie hier in diesem Ausführungsbeispiel dargestellt, die beiden positiven Achromate 3 und 4 als ein System bzw. eine Gruppe betrachtet und zusammen mit dem Achromat 5 verschoben. In dieser Hinsicht treten auch keinerlei Probleme bezüglich der Strichplatte 6 zum Fehlsichtigkeitsausgleich auf, da beim Verschieben der Achromate 3, 4 und 5 die Zwischenbildebene ebenfalls an einem anderen Ort im Okular gebildet wird.

Das Okular 1 erzeugt ein aufrechtes Bild, damit vorteilhafterweise keine Aufrichtung des Zwischenbildes erfolgt.

Das Okular 1 kann mit Mehrschichtvergütungen auf jeder Glas - Luftfläche versehen sein. Dieser optische Aufbau des Okulars 1 bietet ein helles, kontrastreiches und reflexfreies Bild. Selbstverständlich können diese Ausführungen des Okulars 1 hinsichtlich Vergütung, Linsenart und der Korrektion der Abbildungsfehler bezüglich des Verwendungszweckes verschieden sein.

## Patentansprüche

1. Okular mit einer in einer Zwischenbildebene eingebrachten Strichplatte, wobei in einem Gehäuse befindliche Linsengruppen fest oder verschiebbar angeordnet sind, **dadurch gekennzeichnet, dass** die Linsengruppen (2, 3, 4, 5) derart in dem gemeinsamen Gehäuse (12) angeordnet sind, dass nach einer ersten Linse (5) in Strahlrichtung gesehen im Bereich zwischen den das Okular begrenzenden Linsengruppen (2,5) die Zwischenbildebene entsteht wobei für einen Fehlsichtigkeitsausgleich die Strichplatte (6) auf einer optischen Achse (9) bezüglich des gemeinsamen Gehäuses (12) verschiebbar ist.

2. Okular nach Anspruch 1, **dadurch gekennzeichnet, dass** die Strichplatte (6) mittels eines Rändelrings (8) verschiebbar ist.

3. Okular nach Anspruch 2, **dadurch gekennzeichnet, dass** der Rändelring (8) an einer Außenseite des Gehäuses (12) durch ein Verbindungselement (7) mit der Strichplatte (6) verbunden ist.

4. Okular nach Anspruch 1, **dadurch gekennzeichnet, dass** zur Erreichung von variablen Vergrößerungen zwei Achromate (3,4), welche in Strahlrichtung vor einer Augenlinse (2) angeordnet sind, zusammen mit einem negativen Achromat (5), welcher in Strahlrichtung vor der Strichplatte (6) vorgesehen ist, auf der optischen Achse (9) gegenüber der Augenlinse (2) verschiebbar angeordnet sind.

5. Okular nach Anspruch 1; **dadurch gekennzeichnet, dass** am Gehäuse (12) eine Dioptrienteilung vorgesehen ist.

## Claims

1. Eyepiece having a reticle plate placed in an intermediate image plane, with lens groups contained in a housing being arranged fixed or displaceably, **characterised in that** the lens groups (2, 3, 4, 5) are arranged in the common housing (12) so that the intermediate image plane is formed after a first lens (5) as seen in the beam direction, in the region between the lens groups (2, 5) delimiting the eyepiece, the reticle plate (6) being displaceable on an optical axis (9) relative to the common housing (12) for visual defect compensation.

2. Eyepiece according to Claim 1, **characterised in that** the reticle plate (6) can be displaced by means of a knurled ring (8).

3. Eyepiece according to Claim 2, **characterised in that** the knurled ring (8) on an outer side of the housing (12) is connected to the reticle plate (6) by a connecting element (7).

4. Eyepiece according to Claim 1, **characterised in that** in order to achieve variable magnifications, two achromatic lenses (3, 4) which are arranged before an eye lens (2) in the beam direction, together with a negative achromatic lens (5) which is provided before the reticle plate (6) in the beam direction, are arranged displaceably on the optical axis (9) relative to the eye lens (2).

5. Eyepiece according to Claim 1, **characterised in that** a dioptric scale is provided on the housing (12).

## Revendications

1. Oculaire comprenant un réticule intercalé placé dans un plan image intermédiaire, dans lequel des groupes de lentilles contenus dans un boîtier sont disposés fixes ou mobiles en translation, **caractérisé en ce que** les groupes de lentilles (2, 3, 4, 5) sont disposés dans le même boîtier commun (12), de telle manière que le plan image intermédiaire se forme en aval d'une première lentille (5), vu dans la direction du faisceau, dans la région située entre les groupes de lentilles (2, 5) qui limitent l'oculaire, le réticule (6) pouvant être déplacé en translation par rapport au boîtier commun (12) sur un axe optique (9). pour une compensation de défaut de collimation.

2. Oculaire selon la revendication 1, **caractérisé en ce que** le réticule (6) peut être déplacé en translation au moyen d'une bague moletée (8).

3. Oculaire selon la revendication 2, **caractérisé en ce que** la bague moletée (8), située sur un côté extérieur du boîtier (12), est reliée au réticule (6) par un élément de liaison (7).

4. Oculaire selon la revendication 1, **caractérisé en ce que**, pour obtenir des grossissements variables, deux lentilles achromatiques (3, 4) qui sont disposées en amont d'une lentille oculaire (2), vues dans la direction du faisceau, avec une lentille achromatique négative (5) qui est prévue en amont du réticule (6), vue dans la direction du faisceau, sont disposées mobiles en translation sur l'axe optique (9) par rapport à la lentille oculaire (2).

5. Oculaire selon la revendication 1, **caractérisée en ce qu'**il est prévu une graduation en dioptries sur le boîtier (12).
